# EUROPÄISCHE PATENTSCHRIFT

(11) **EP 2 529 269 B1**
(45) Veröffentlichungstag und Bekanntmachung des Hinweises auf die Patenterteilung: **13.11.2013**
(21) Anmeldenummer: 11707060.7
(22) Anmeldetag: 21.01.2011
(51) Int. Cl.: G02C 5/12

(54) **BRILLE**
GLASSES
LUNETTES

(30) Priorität: 28.01.2010 AT 1122010
(43) Veröffentlichungstag der Anmeldung: 05.12.2012
(73) Patentinhaber: Silhouette International Schmied AG, 4020 Linz (AT)
(72) Erfinder: FUCHS, Gerhard, A-6522 Kauns (AT); SPINDELBALKER, Rupert, A-4048 Puchenau (AT)
(74) Vertreter: Hübscher, Helmut
(86) Internationale Anmeldenummer: PCT/AT2011/000036
(87) Internationale Veröffentlichungsnummer: WO 2011/091456

(56) Entgegenhaltungen:
- EP-A1- 0 237 881
- DE-A1- 2 930 094
- FR-A1- 2 476 332

## Beschreibung

### Technisches Gebiet

Die Erfindung bezieht sich auf eine Brille mit einem Gestell und mit im Bereich von Gestellansätzen vorgesehenen Nasenauflagen, die in einer Verstellrichtung hintereinander angeordnete Raststellungen aufweisen.

### Stand der Technik

Um eine Brille an die Nasenform eines Brillenträgers anpassen zu können, ist es bekannt, die Nasenauflagen am die Brillengläser aufnehmenden Gestell verstellbar anzuordnen, beispielsweise dadurch, dass die Nasenauflagen in einer entlang des Fassungsumfangs verlaufenden Aufnahmenut zwischen mehreren Raststellungen schwenkverstellbar gelagert werden. Eine andere bekannte Verstelleinrichtung sieht Nasenauflagen mit einem der Auflagefläche gegenüberliegenden Befestigungsansatz vor (DE 36 38 311 C2), in dem ein zur Auflagefläche im Wesentlichen paralleles Sackloch mit hintereinander angeordneten, erweiterten Rastausnehmungen für einen Rastkopf ausgebildet ist, der am Ende eines in Form eines Befestigungsarms ausgebildeten Gestellansatzes ausgeformt ist. Je nach der Raststellung kann somit die Nasenauflage entlang des Gestellansatzes verstellt werden, wobei durch den kugeligen Rastkopf eine begrenzte, allseitige Verschwenkung der Nasenauflage zur möglichst druckfreien Anlage an der Nase gewährleistet werden soll. Nachteilig bei dieser bekannten, konstruktiv vergleichsweise einfachen Verstellung der Nasenauflagen ist allerdings, dass eine Anpassung an unterschiedlich breite Nasen durch eine Verlagerung der Nasenauflagen in Längsrichtung der Nase nur begrenzt möglich ist.

### Darstellung der Erfindung

Der Erfindung liegt somit die Aufgabe zugrunde, eine Brille der eingangs geschilderten Art so auszugestalten, dass eine vorteilhafte Anpassung der Nasenauflagen insbesondere an die Nasenbreite sichergestellt werden kann.

Die Erfindung löst die gestellte Aufgabe dadurch, dass die Nasenauflagen auf der ihrer Auflagefläche gegenüberliegenden Seite mit einem quer zur Auflagefläche abstehenden Steckansatz versehen sind, der wenigstens zwei in Steckrichtung aufeinanderfolgende Rasten zum wahlweisen Eingriff in eine Rastausnehmung der Gestellansätze bildet.

Zufolge dieser Maßnahme wird die Nasenauflage quer zu ihrer Auflagefläche in Steckrichtung ihres Steckansatzes verstellt, also quer zur Nase, was die gewünschte Anpassung an unterschiedliche Nasenbreiten ermöglicht, und zwar mit sehr einfachen Konstruktionsmitteln, weil die Rastausnehmung in einem Gestellansatz vorgesehen ist. Der Steckansatz der Nasenauflagen ist ja mit den in Steckrichtung aufeinanderfolgenden Rasten versehen, die den Abstand der Nasenauflagen von den Gestellansätzen bestimmen. Die begrenzte, allseitige Schwenkbeweglichkeit der Nasenauflagen aufgrund der in den Rastausnehmungen der Gestellansätze gehaltenen Rasten wird dann in einfacher Weise ermöglicht, wenn die Rasten der Steckansätze als Rastverdickungen ausgebildet sind, die mit der jeweiligen Rastausnehmung eine Art Kugelgelenk ergeben. Es ist aber durchaus möglich, die Rasten der Steckansätze in Form von Rastverjüngungen vorzusehen, die in die Rastausnehmungen einrasten. Obwohl sich die vorgeschlagene Konstruktion insbesondere für Brillengestelle mit einer Fassung für die Brillengläser eignet, weil in diesem Fall die die Nasenauflagen aufnehmenden Gestellansätze in einem Umfangsabschnitt der Fassung vorgesehen werden können, ist die Erfindung keineswegs auf Brillen mit einer durch das Gestell gebildeten Fassung beschränkt. Es könnten durchaus auch fassungslose Brillen eingesetzt werden, bei denen die Gestellansätze an einem Nasensteg anschließen, über den die fassungslosen Gläser miteinander verbunden sind.

Zusätzlich zu der Verstellung der Nasenauflagen quer zu ihrer Auflagefläche kann eine Verstellung in Längsrichtung der Gestellansätze vorgesehen werden, wenn das Gestell für jede Nasenauflage wenigstens zwei in Längsrichtung der Gestellansätze aufeinanderfolgende Rastausnehmungen für den Steckansatz aufweist. In diesem Fall kann durch die Wahl einer der mit Abstand in Längsrichtung der Gestellansätze vorgesehenen Rastausnehmungen für die Befestigung der Nasenauflage die gewünschte Anpassung der Brille der Höhe nach, also entlang der Nase, vorgenommen werden. Besonders einfache Konstruktionsverhältnisse ergeben sich in diesem Zusammenhang dadurch, dass die in Längsrichtung der Gestellansätze aufeinanderfolgenden Rastausnehmungen mit einem Durchtritt für den Steckansatz verbunden sind. Aufgrund einer solchen Konstruktion braucht nämlich der Steckansatz der Nasenauflagen nicht in Steckrichtung aus der jeweiligen Rastausnehmung herausgezogen zu werden, um wieder in die benachbarte Rastausnehmung eingesetzt zu werden, weil die Nasenauflagen beim Vorsehen von Rastverjüngungen durch den Durchtritt in der jeweils gewählten Raststellung des Steckansatzes von einer Rastausnehmung in die benachbarte verlagert werden können.

Da im Allgemeinen die Nasenauflagen eine Längserstreckung in Längsrichtung der Nase aufweisen, sollte eine Drehung der Nasenauflagen in den Rastausnehmungen der Gestellansätze vermieden werden. Zu diesem Zweck können die Steckansätze der Nasenauflagen einen vom Kreisquerschnitt abweichenden, vorzugsweise ovalen Querschnitt aufweisen, an den der Öffnungsquerschnitt der Rastausnehmungen anzupassen ist, sodass die Steckansätze der Nasenauflagen in den Rastausnehmungen gegen eine Drehung um ihre Achse gesichert sind.

### Kurze Beschreibung der Zeichnung

In der Zeichnung ist der Erfindungsgegenstand beispielsweise dargestellt. Es zeigen
- Fig. 1: eine erfindungsgemäße Brille ausschnittsweise im Bereich des Nasenstegs in einer Rückansicht,
- Fig. 2: ein Brillengestell im Bereich der Nasenauflage in einer schematischen Ansicht auf die der Nasenauflage abgekehrte Gestellseite in einem größeren Maßstab,
- Fig. 3: einen schematischen Schnitt nach der Linie III-III der Fig. 2 und
- Fig. 4: eine Konstruktionsvariante einer erfindungsgemäßen Brille ausschnittsweise im Bereich einer Nasenauflage in einer zum Teil geschnittenen Rückansicht.

### Weg zur Ausführung der Erfindung

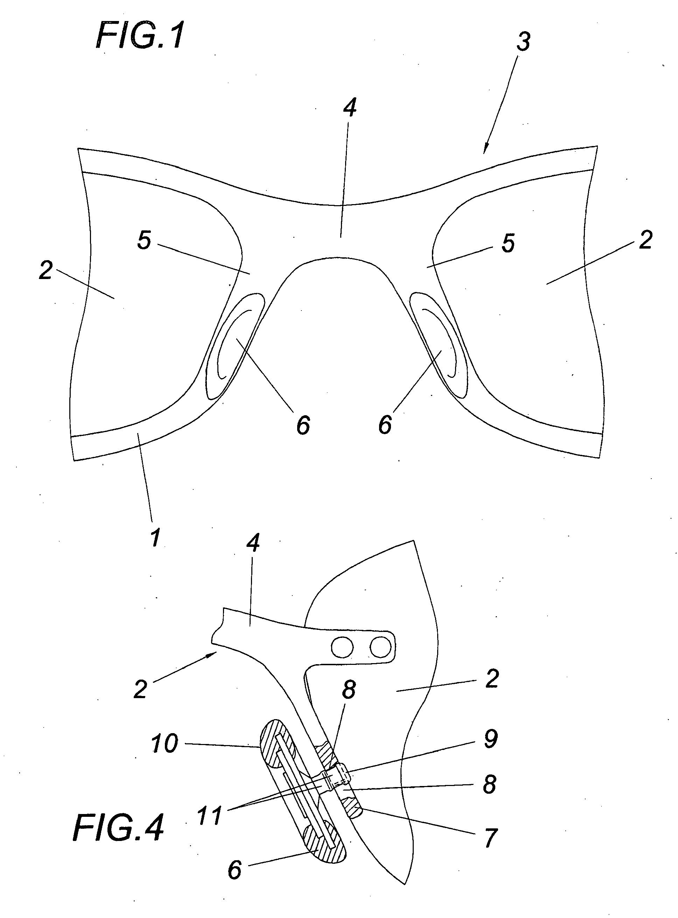

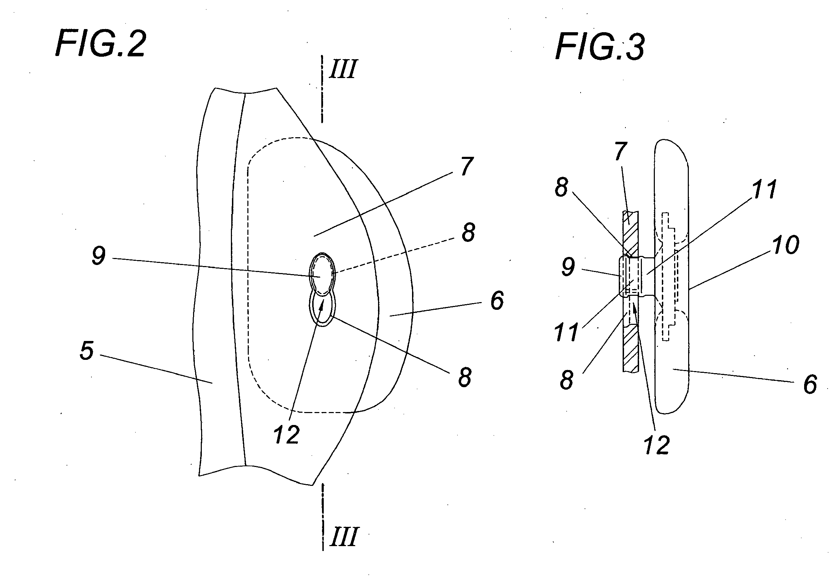

Die in der Fig. 1 dargestellte Brille ist mit einem eine Fassung 1 für Brillengläser 2 bildenden Gestell 3 versehen, das einen Nasensteg 4 bildet und im an den Nasensteg 4 anschließenden Umfangsabschnitt 5 der Fassung 1 Nasenauflagen 6 trägt, die einerseits quer zum Umfangsabschnitt 5 und anderseits in dessen Umfangsrichtung verstellbar gehalten werden. Zu diesem Zweck weist der Umfangsabschnitt 5 der Fassung 1 gemäß den Fig. 2 und 3 einen Gestellansatz 7 für die Nasenauflage 6 mit zwei in Längsrichtung des Gestellansatzes 7 und demgemäß in Umfangsrichtung des Umfangsabschnitts 5 hintereinander angeordneten Rastausnehmungen 8 für einen Steckansatz 9 der Nasenauflage 6 auf. Dieser Steckansatz 9 steht auf der von der Auflagefläche 10 der Nasenauflage 6 abgekehrten Seite quer zur Nasenauflage 6 ab, wie dies insbesondere der Fig. 3 entnommen werden kann. Entlang des Steckansatzes 9 sind zwei Rasten 11 in Form von Verjüngungen des Steckansatzes 9 vorgesehen, die wahlweise mit einer der Rastausnehmungen 8 des Gestellansatzes 7 zusammenwirken. In der Fig. 3 ist die Raststellung dargestellt, in der die Nasenauflage 6 gegen die Nase vorsteht, was eine Anpassung der Brille an schmale Nasen erlaubt. Für breitere Nasen wird der Steckansatz 9 tiefer in die Rastausnehmung 8 eingedrückt, sodass die der Nasenauflage 6 nähere Rast 11 zum Einsatz kommt.

Die beiden in Längsrichtung des Gestellansatzes 7 hintereinander angeordneten Rastausnehmungen 8 erlauben die zusätzliche Versetzung der Nasenauflagen 6 in Umfangsrichtung der Fassung 1, was eine zusätzliche Brillenanpassung an die Gesichtsanatomie eines Brillenträgers ermöglicht. Da die beiden Rastausnehmungen 8 mit einem Durchtritt 12 für den Steckansatz 9 verbunden sind, kann die Nasenauflage 6 in der gewählten Raststellung für die Rasten 11 zwischen den beiden Rastausnehmungen 8 verlagert werden, sodass sich ein Lösen der Nasenauflage 6 vom Gestellansatz 7 und ein neuerliches Einsetzen in die jeweils andere Rastausnehmung 8 erübrigt.

Wie der Fig. 2 entnommen werden kann, weist der Steckansatz 9 einen von der Kreisform abweichenden, ovalen Querschnitt auf, der mit dem Öffnungsquerschnitt der Rastausnehmungen 8 im Wesentlichen übereinstimmt, sodass die Nasenauflage 6 verdrehungssicher in den Rastausnehmungen 8 des Gestellansatzes 7 gehalten wird. Um ein unbeabsichtigtes Lösen der Nasenauflagen 6 aus den Rastausnehmungen 8 zu vermeiden, ist das freie Ende des Steckansatzes 9 verdickt ausgebildet. Der Steckansatz 9 kann daher nur mit einer größeren Kraftanwendung aus den Rastausnehmungen 8 gelöst werden.

Aus der Fig. 4 geht hervor, dass die beschriebene Verstellung der Nasenauflagen 6 auch bei fassungslosen Brillen genützt werden kann, bei denen die Brillengläser 2 lediglich durch einen Nasensteg 4 des Gestells 2 miteinander verbunden sind. In diesem Fall schließt der die Nasenauflagen 6 aufnehmende Gestellansatz 7 in Umfangsrichtung des jeweiligen Brillenglases 2 an den Nasensteg 4 an. Die Befestigung der Nasenauflagen 6 über einen in Rastausnehmungen 8 des Gestellansatzes 7 eingreifenden, mit Rasten 11 versehenen Steckansatz 9 auf der der Auflagefläche 10 der Nasenauflage 6 abgekehrten Seite ergibt sich in übereinstimmender Weise mit der Ausführungsform nach den Fig. 2 und 3.

## Patentansprüche

1. Brille mit einem Gestell (3) und mit im Bereich von Gestellansätzen (7) vorgesehenen Nasenauflagen (6), die in einer Verstellrichtung hintereinander angeordnete Raststellungen aufweisen, **dadurch gekennzeichnet, dass** die Nasenauflagen (6) auf der ihrer Auflagefläche (10) gegenüberliegenden Seite mit einem quer zur Auflagefläche (10) abstehenden Steckansatz (9) versehen sind, der wenigstens zwei in Steckrichtung aufeinanderfolgende Rasten (11) zum wahlweisen Eingriff in eine Rastausnehmung (8) der Gestellansätze (7) bildet.

2. Brille nach Anspruch 1, **dadurch gekennzeichnet, dass** das Gestell (3) für jede Nasenauflage (6) wenigstens zwei in Längsrichtung der Gestellansätze (7) aufeinanderfolgende Rastausnehmungen (8) für den Steckansatz (9) der Nasenauflagen (6) aufweist.

3. Brille nach Anspruch 2, **dadurch gekennzeichnet, dass** die in Längsrichtung der Gestellansätze (7) aufeinanderfolgenden Rastausnehmungen (8) mit einem Durchtritt (12) für den Steckansatz (9) der Nasenauflagen (6) verbunden sind.

4. Brille nach einem der Ansprüche 1 bis 3, **dadurch gekennzeichnet, dass** die Steckansätze (9) der Nasenauflagen (6) einen vom Kreisquerschnitt abweichenden, vorzugsweise ovalen Querschnitt aufweisen und dass der Offnungsquerschnitt der Rastausnehmungen (8) der Gestellansätze (7) an den Querschnitt der Steckansätze (9) angepasst ist.

## Claims

1. Glasses having a frame (3) and having nose pads (6) which are provided in the region of frame attachments (7) and have catch positions arranged one behind the other in an adjustment direction, **characterised in that** the nose pads (6) are provided on the side opposite their support surface (10) with a plug-in attachment (9) which protrudes transversely with respect to the support surface (10) and forms at least two catches (11) in succession in the plug-in direction for optional engagement into a catch recess (8) of the frame attachments (7).

2. Glasses as claimed in claim 1, **characterised in that** for each nose pad (6) the frame (3) has at least two catch recesses (8) in succession in the longitudinal direction of the frame attachments (7), for the plug-in attachment (9) of the nose pads (6).

3. Glasses as claimed in claim 2, **characterised in that** the catch recesses (8) in succession in the longitudinal direction of the frame attachments (7) are connected with a passage (12) for the plug-in attachment (9) of the nose pads (6).

4. Glasses as claimed in any one of claims 1 to 3, **characterised in that** the plug-in attachments (9) of the nose pads (6) have a cross section deviating from the circul cross section, preferably an oval cross section, and that the opening cross section of the catch recesses (8) of the frame attachments (7) is adapted to the cross section of the plug-in attachments (9).

## Revendications

1. Lunettes avec une monture (3) et avec des patins de nez (6) prévus dans la zone des embases de la monture (7) qui présentent des positions d'arrêt disposées l'une derrière l'autre dans une direction de réglage, **caractérisées en ce que** les patins de nez (6) sont munis d'un embout d'enfichage (9) disposé en saillie transversalement à la face d'appui (10) et sur la face opposée à leur surface d'appui (10) qui forme au moins deux crans (11) successifs dans le sens d'enfichage pour le logement sélectif dans un évidement d'arrêt (8) des embases de la monture (7).

2. Lunettes selon la revendication 1, **caractérisées en ce que** la monture (3) présente pour chaque patin de nez (6) au moins deux évidements d'arrêt (8) successifs dans le sens longitudinal des embases de la monture (7) pour l'embout d'enfichage (9) des patins de nez (6).

3. Lunettes selon la revendication 2, **caractérisées en ce que** les évidements d'arrêt (8) successifs dans le sens longitudinal des embases de la monture (7) sont reliés avec un passage (12) pour l'embout d'enfichage (9) des patins de nez (6).

4. Lunettes selon l'une des revendications 1 à 3, **caractérisées en ce que** les embouts d'enfichage (9) des patins de nez (6) présentent une section transversale différente de la section transversale circulaire, de préférence ovale, et **en ce que** la section transversale d'ouverture des évidements d'arrêt (8) des embases de la monture (7) est adaptée à la section transversale des embouts d'enfichage (9).
